# EUROPÄISCHE PATENTANMELDUNG

(11) **EP 0 668 533 A2**
(43) Veröffentlichungstag der Anmeldung: **23.08.1995**
(21) Anmeldenummer: 95101347.3
(22) Anmeldetag: 01.02.1995
(51) Int. Cl.: G03B 27/32, G03B 27/73

(54) **Kopiermaschine**

(30) Priorität: 14.02.1994 DE 4404615
(71) Anmelder: Agfa-Gevaert AG, D-51373 Leverkusen (DE)
(72) Erfinder: Bachem, Egon, D-51399 Burscheid (DE); Wernicke, Ubbo, Dr., D-51503 Rösrath (DE)

(57) **Zusammenfassung**

Kopiermaschine mit verschiedenen Bildbühnen zur Herstellung von Kopien auf farbfotografischem Papier von Farbnegativen, Diapositiven und Aufsichtsbildern, bei der zur Belichtung des Fotomaterials immer das Kopierlicht aus ein und demselben Lampenhaus benutzt wird.

## Beschreibung

Die Erfindung betrifft eine Kopiermaschine zur Herstellung von Kopien, insbesondere farbfotografischen Kopien von Negativen, Diapositiven und Aufsichtsvorlagen.

Die heutigen Kopiermaschinen (Printer) sind fast ausschließlich zur Kopie von Color-Negativen auf farbfotografisches Papier ausgelegt.

Die Kopiermaschine verfügt dazu über ein bzw. mehrere Lichtquellen und über elektronische Meßvorrichtungen, mit denen das Licht, das durch das individuelle Negativ auf das Fotopapier gelangt, gemessen und nach Lichtmenge und Lichtfilterung gesteuert wird.

Ziel ist dabei, daß von den unterschiedlichsten farbstichigen Negativen jeweils auf ein und dasselbe Fotopapier gerade soviel Licht gelangt, daß neutrale, d.h. nicht farbstichige und nicht zu helle und auch nicht zu dunkle Kopien erzeugt werden.

Einige Kopiermaschinen sind zur Herstellung von Kopien von Diapositiven eingerichtet, wobei nur auf ein spezielles Umkehrpapier belichtet wird, das wiederum in einem speziellen Umkehrverarbeitungsprozeß entwickelt wird.

Die Regelung der individuellen Belichtung erfolgt in diesem Fall wie beim Color-Negativ-Printer.

Kopiermaschinen für Diapositive besitzen häufig die Möglichkeiten, sogenannte Bild-zu-Bild-Kopien herzustellen, bei der die Originale von zusätzlichen fremden Lichtquellen (Halogen oder Blitz) in Aufsicht beleuchtet werden. Das Problem ist dabei, daß diese Lichtquellen mühsam in Filterung und Helligkeit so angepaßt werden müssen, daß die Vorlagen einigermaßen neutral auf dem Umkehrpapier wiedergegeben werden.

Hierzu sind sog. Filterkästen der Lichtquelle vorgeschaltet. Die einmal ermittelte mittlere Lichtintensität und Dauer der Belichtung und die Filterung des Lichtes gilt dann einheitlich für alle Original-Vorlagen, ohne daß eine individuelle Korrektur möglich ist.

Beim Wechsel der Emulsionsnummer des Umkehrpapiers oder bei Prozeßabweichungen der Entwicklung muß mühsam die Filterung nachkorrigiert werden.

Eine solche Korrektur wird bei Standard-Kopiermaschinen für Colornegativfilme elektronisch geregelt, wobei sich diese Regelung aber auf externe Lichtquellen nicht anwenden läßt.

Gegenstand der Erfindung ist die Nutzung des geregelten Kopierlichtes für die Herstellung von Farbkopien ausgehend von Farbnegativen, Diapositiven und von Aufsichtsbildern.

Dies geschieht erfindungsgemäß mit einer Kopiermaschine mit unterschiedlichen Bildbühnen, wobei zur Belichtung des Fotomaterials in jedem Fall das Kopierlicht aus ein und demselben Lampenhaus benutzt wird.

Im Falle eines nichttransparenten Positivoriginals wird dazu das Licht des Lampenhauses auf das Positivoriginal gelenkt und über einen Spiegel in den üblichen Lichtweg zurück und durch eine Linse auf das Fotomaterial geführt.

Das vom Positivoriginal reflektierte Licht durchläuft dabei auch die elektronischen Meßvorrichtungen und kann so geregelt werden.

Durch die Ableitung dieses geregelten Lichtes über Lichtleiter auf das Positivoriginal werden die vorhandenen Steuer- und Regelvorrichtungen auch für die Bild-zu-Bild-Kopie nutzbar.

Darüber hinaus führt die Beleuchtung der Originale über Lichtleiter nicht zur unerwünschten Erwärmung der Originale, so daß die Planlage der Originale sich bei der Belichtung nicht ändert und eine Vakuum-Ansaugung der Originale überflüssig wird.

## Patentansprüche

1. Kopiermaschine mit verschiedenen Bildbühnen zur Herstellung von Kopien auf farbfotografischem Papier von Farbnegativen, Diapositiven und Aufsichtsvorlagen (nichttransparente Positivoriginale), dadurch gekennzeichnet, daß zur Belichtung des Fotomaterials immer das Kopierlicht aus ein und demselben Lampenhaus benutzt wird.

2. Kopiermaschine nach Patentanspruch 1, dadurch gekennzeichnet, daß das Licht bei Aufsichtsvorlagen mit einer Glasfaseroptik abgeleitet und auf die Oberfläche des zu kopierenden Originals hingeleitet wird.

3. Kopiermaschine nach Patentanspruch 1 mit elektronischer Meßvorrichtung zur Messung und Steuerung von Lichtmenge und Lichtfilterung, dadurch gekennzeichnet, daß diese Meßvorrichtung auch im Falle einer Aufsichtsvorlage so angeordnet ist, daß sie vom Licht erst nach Beleuchtung der Aufsichtsvorlage passiert wird.

4. Kopiermaschine nach Patentanspruch 1, dadurch gekennzeichnet, daß zur Steuerung der Belichtung von Dias, Negativen und Bildvorlagen nach Zeit, Intensität und Filterung die gleichen Lichtquellen, die gleichen Farbfilter und die gleichen elektronischen Meß- und Regelvorrichtungen benutzt werden.
